# EUROPEAN PATENT APPLICATION

(11) **EP 2 128 954 A2**
(43) Date of publication of application: **02.12.2009**
(21) Application number: 09152969.3
(22) Date of filing: 17.02.2009
(51) Int. Cl.: H02J 3/14

(54) **Device, control device and method**

(30) Priority: 25.02.2008 FI 20085167
(71) Applicant: Ensto Electric Oy, 06100 Porvoo (FI)
(72) Inventor: Mettiäinen, Kimmo, 06100, Porvoo (FI)
(74) Representative: Holmström, Stefan Mikael

(57) **Abstract**

The invention relates to a device (10) for controlling power supply to electric appliances of a building, comprising a first and a second output (11, 12), an interface (20) for receiving a control signal, and a controller (21). In order to concentrate electricity consumption elsewhere than in a loading peak, the first output (11) is used for controlling electricity supply to such electric devices whose electricity supply should be switched off on the basis of a first criterion; the second output (12) is an output for controlling electricity supply to such electric appliances whose power supply should be switched off on the basis of a second criterion; the controller (21) is configured to receive a control signal (18) from the interface (20) and, in response to the control signal (18), to examine control parameters to identify the time intervals during which said first criterion is met and to identify the time intervals during which the second criterion is met.

## Description

### FIELD OF THE INVENTION

The invention relates to controlling power supply to electric appliances of a building or part of a building in such a way that the electricity bill resulting from the electricity consumption of the electric appliances can be minimized.

### DESCRIPTION OF PRIOR ART

In a larger scale, one of the factors having a significant effect on the price of electricity is time-interval-specific variation of electricity consumption. There are usually a few times during the day when the electricity consumption is at its peak. What is often behind such regularly repeated loading peaks is people's habit of doing, at a particular time, things requiring a lot of electricity, such as cooking, heating an electric sauna stove or watching television. The loading peaks have a significant effect on the price of electricity because in practice, the production capacity of electricity must be dimensioned sufficient in order to ensure the electricity consumption during the loading peaks.

If the consumption behaviour of electricity consumers could be guided in such a way that it was possible during the loading peaks to efficiently and flexibly switch off power supply to devices not needed at that particular time, a situation would be achieved where the production capacity could be dimensioned smaller. Since for instance the Nordic electricity exchange Nordpool uses pricing based on time intervals, i.e. the price varies at different times of the day (hour-specific pricing), it would also be advantageous for consumers to be able to minimize the consumption during the loading peaks when the price of electricity is high.

In consumers' electricity consumption, the trend is increasingly towards real-time consumption measurement, which means that in the near future an increasing number of electricity consumers are likely to have hour-based billing. In such a case, the sum of the electricity bill depends on the price of electricity during that interval, for example an hour, when electricity was consumed in reality.

It would be advantageous for consumers of electricity to be able to change their electricity consumption in such a way that the consumption was lower within periods when the price is high due to a loading peak.

### SUMMARY OF THE INVENTION

An object of this invention is to solve the above problem and to provide a solution which allows electricity consumption to be simply and flexibly directed at times when the price of electricity is not high due to a loading peak. This object is achieved with a device according to independent claim 1, a control device according to independent claim 10 and a method according to independent claim 11.

The invention utilizes information on the price of electricity, available in advance and relating to time-interval-specific pricing determined for a particular period. The Nordic electricity exchange Nordpool, for example, publishes in advance the time-interval-specific price for the next 24 hours, in other words the price has been determined separately for each hour in advance. On the basis of the time-interval-specific price, a control signal can be generated which includes time-interval-specific control parameters selected on the basis of the price determined for the time intervals included in a particular time period. This control signal is given to a device whose different outputs are used to control different electric appliances in accordance with criteria appropriate for these particular appliances. When the price of electricity is unduly high with regard to the use of the electric appliances controlled with a particular output, power supply to these electric appliances is switched off for those intervals when the price is too high. At the same time, however, power supply can be continued to devices whose power supply control is implemented through another output, provided that, in regard of this output, the determined criterion for switching off the power supply has not yet been met.

Thus, the invention enables separate criteria to be flexibly provided for different electric appliances as to when their power supply should be allowed or switched off. When the price of electricity is at its highest, only the absolutely necessary devices are in use, whereas when the price of electricity is at its lowest, power supply can be allowed to all electric appliances.

Preferred embodiments of the invention are disclosed in the dependent claims.

### BRIEF DESRIPTION OF THE FIGURES

In the following, the invention will be described in greater detail with reference to the attached figures, of which:
Figure 1 illustrates variation in the price of electricity;
Figure 2 illustrates a block diagram of a first embodiment of the invention;
Figure 3 illustrates a first alternative of controlling power supply;
Figure 4 illustrates a second alternative of controlling power supply; and
Figure 5 illustrates a block diagram of an embodiment of a device according to the invention.

### DESCRIPTION OF AT LEAST ONE EMBODIMENT

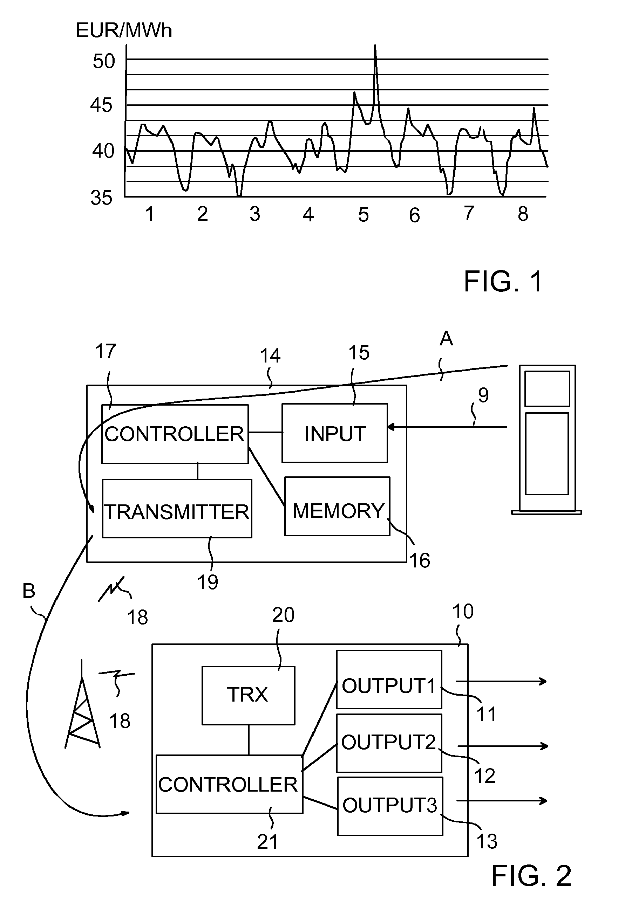

Figure 1 illustrates variation in the price of electricity. Figure 1 shows, by way of example, the price of electricity in unit EUR/MWh during eight days. The price of electricity for the next 24 hours is determined in the Nordic electricity exchange Nordpool the previous day in periods of one hour.

Figure 1 shows that there may be considerable variation in the price level during 24 hours. If there were an efficient and flexible solution available for consumers, significant savings could be achieved in the price of electricity by putting off consumption by a few hours to avoid loading peaks.

Figure 2 illustrates a block diagram of a first preferred embodiment of the invention. Figure 2 shows a device 10 which may be installed in the electricity cabin of a building or part of a building to control the power supply to the electric appliances in the building.

In this example, the device 10 has a first output 11, a second output 12 and a third output 13, via which control of the power supply to different electric appliances is implemented. In practice, the number of outputs to be controlled separately may be even larger, although in many cases two outputs to be controlled separately are sufficient.

Via the first output 11, such electric appliances are controlled in the case of which the power supply can be switched off according to a first criterion. Via the second output 12, in turn, such electric appliances are controlled in the case of which the power supply can be switched off according to a second criterion, and via the third output 13, such electric appliances are controlled in the case of which the power supply can be switched off according to a third criterion.

In step A of Figure 2, a control device 14 of the service provider receives, via an input 15, information 9 on the time-interval-specific price of electricity for a particular time period, and generates on the basis of this a control signal to be transmitted further. This may be, for instance, an hour-specific price for the next 24 hours, i.e. a different price for each hour. The control device 14 may, in practice, be implemented with a computer executing given computer software, for example, and it may receive the information 9 on the price of electricity for instance from an electricity exchange or from the electricity producer.

When the control device 14 has received the price of the next time period, a controller 17 thereof searches from a memory 16 the information on the devices 10 it should control. This information includes, for instance, identifiers by means of which control commands can be transmitted to the devices via a communications network. On the basis of the received electricity price for a period of time, the controller 17 generates a control signal 18 which time-interval-specifically contains time-interval-specific control parameters for a given period of time, the control parameters having been selected on the basis of the price of electricity defined with regard to the time intervals included in this particular time period. In step B, this control signal is transmitted by the control device 14 via transmitter means 19 to the devices 10 whose information has been searched from the memory 16.

In Figure 2, it is assumed, by way of example, that the transmitter means 19 in the control device 14 are formed of a transmitter of a cellular radio system and that the device to be controlled has an interface 20 comprising a receiver of a cellular radio system. Thus, the control signal 18 may be transmitted as a short message (SMS) of the GSM (Global System for Mobile Communications) to the devices 10 to be controlled. However, it is feasible that the communications link between the control device 14 and the devices 10 to be controlled is implemented in an alternative manner, for example with a wired broadband link. Thus, the transmitter means 19 and the interface 20 comprise units for enabling wired communication between the control device 14 and the device 10.

If the device 10 to be controlled comprises means for measuring electricity consumption in the building or a part of the building where the electric appliances controlled by it are positioned, or if it alternatively comprises an input for receiving information indicating the electricity consumption, a controller 21 of the device 10 may, in response to receiving the control signal 18 via the interface 20, transmit measurement information on the power consumption to the control device 14. In such a case, the information is preferably time-interval-specific consumption information, i.e. the amount of electricity (kWh) consumed during the different hours of a day. This information may be exploited when providing consumers with consumption reports which contain for example information on the hour-specific or day-specific electricity consumption.

When the device 10 to be controlled has received the control signal 18 via the interface 20, the control signal is transmitted to be used by the controller 21. The controller 21 utilizes the time-interval-specific control parameters included in the control signal in such a way that it checks time-interval-specifically whether the criteria for switching off power supply are met with regard to the electric appliances connected to the first output 11, with regard to the electric appliances connected to the second output 12 and with regard to the electric appliances connected to the third output 13, whereby each output has, in this example, a criterion of its own for switching off the power supply.

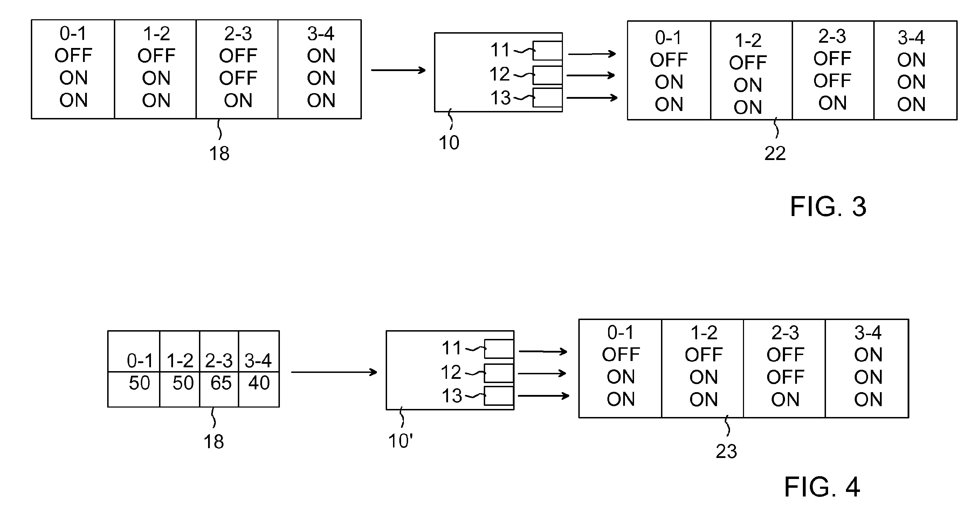

Figure 3 illustrates a first alternative of the controlling of power supply. The control of Figure 3 is suitable to be utilized in the embodiment of Figure 2, for example.

In the case of Figure 3, the device 10 receives a control signal 18 including control parameters time-interval-specifically, i.e. information on how the outputs of the device 10 should be controlled at different times. In the example of Figure 3, the control signal includes control parameters with regard to four time intervals, i.e. information on four hours. In practice, however, the control signal preferably includes information on more time intervals, for example information on the next 24 hours.

In Figure 3, the controller of the device 10 thus controls the state of the outputs 11 to 13 in such a way that the power supply is on or off in time intervals indicated by the control signal 18. In the time interval between three and four o'clock, for example, the price of electricity is relatively cheap. Thus, the control signal 18 contains, with regard to all three outputs, a control parameter indicating that power supply should be on during this interval. In this embodiment, no other criteria are used in the control of power supply, due to which the column on the right side of Table 22 indicates that between three o'clock and four o'clock the device controlled the state of all outputs 11 to 13 in such a way that the power supply to the electric appliances controlled by these outputs was then on. Correspondingly, between two and three o'clock, the price of electricity is more expensive, whereby the control signal 18 indicates that the power supply should be on only with regard to the output 13. It can be observed from Table 22 that in this time interval, the device set the state of outputs 11 to 13 in the way indicated by the control signal.

An advantage of this embodiment is that all intelligence relating to the control may be, if required, centralized in the control device 14 of the service provider. The device 10 to be controlled must only have the readiness to control the state of the outputs 11 to 13 in the way indicated by the control signal 18.

Figure 4 illustrates a second alternative of the control of power supply. The control of Figure 4 is suitable to be utilized in the embodimentiof Figure 2, for instance.

In the case of Figure 4, the control signal contains either directly the price of electricity per unit (e.g. 50 cents/kWh) or alternatively an index representing the relative price of electricity at a particular time (e.g. 50 % of the mean price of the day). Instead of a numeral value, for instance a colour code may be used which indicates in which time intervals the price of electricity is high (red), medium (yellow) or low (green).

Criteria have been set for the different outputs in a device 10'. For example for the output 11 it has been determined that the power supply is switched off in intervals when the index representing the price of electricity is over 45. Thus, it is seen from Table 23 of Figure 4 that the power supply has been controlled, via the output 11, to be on only between three and four o'clock because in the control signal 18 the price of electricity is under 45 (i.e. 40 in the right column) only in this time interval. Correspondingly, it has been determined for the output 12 that the power supply is switched off when the index representing the price of electricity is over 55. Thus, it is seen from Table 23 that with regard to the output 12, the power supply is controlled to be off between two and three o'clock because in the control signal 18 this is the only time interval when the criterion is met. Correspondingly, it is determined for the output 13 that the power supply is switched off when the index representing the price of electricity is over 70. Thus it is seen from Table 23 that with regard to the output 13, the power supply has been controlled to be continuously on because the control signal 18 does not contain any time interval when the price of electricity would be so expensive that the index would exceed the value 70.

The embodiment of Figure 4 allows device-specific criteria to be set for the device 10' as to when the power supply is, with regard to the different outputs, switched on and off. For this purpose, the device 10' may have a user interface by means of which consumers can set desired limits themselves. Alternatively, the consumer or the service provider may set these limits via a communications link, for example, by transmitting a second control signal to the device 10'.

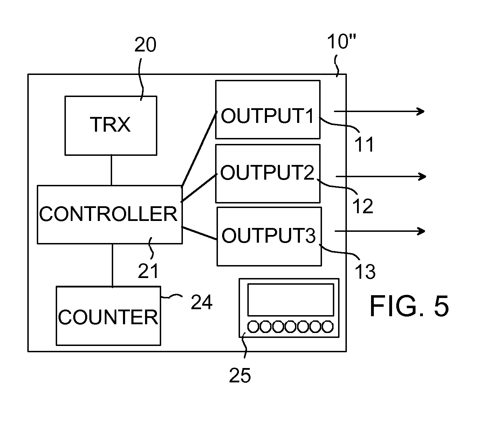

Figure 5 shows a block diagram of an embodiment of a device 10" according to the invention. The embodiment of the device 10" in Figure 5 corresponds to a great extent to the embodiment of the device 10 described in connection with Figure 2, due to which in the following it will be described primarily by bringing forth differences between these embodiments.

In the case of Figure 5, the device 10" comprises, in addition to other parts, also a counter 24 either as a separate part, as shown in Figure 5, or alternatively as combined with the controller 21. The counter 24 of the device 10" keeps a record, with regard to the different outputs 11 to 13, on the number of those time intervals (e.g. hours) within a given time period (e.g. 24 hours) during which a given output has been in a state where the power supply to the electric appliances controlled by this output has been switched off. The number of such time intervals (hours) per time period (24 hours) may be one criterion that the device 10" utilizes when it checks whether the criterion for switching off the power supply is met with regard to a given output.

If, for example, the output 11 of the device 10" is used to control a boiler providing hot service water to a building, one criterion may be that there may only be a given number of hours per day during which the power supply can be switched off. When the device 10" thus receives the control signal which is shown in Figure 3 and indicates that between one and three o'clock the power supply should be switched off for the appliances controlled by the output 11, the device 10" will not automatically comply with the control signal 18. By contrast, it checks first, by means of the counter 24, how may hours the state of the output 11 has been 'Off' during the last 24 hours. Should the number of time intervals, i.e. the number of hours, be exceeded by complying with the control signal 18, the controller of the device 10" notes that the criterion for switching off the power supply to the devices controlled by the output 11 is not met, and thus the criterion deviates from the control parameters indicated by the control signal 18.

A criterion of a corresponding type may also be set for the output 12, with which the floor heating of a room is controlled. In this case, however, the time period under examination may be shorter, for example four hours, and this time period allows at most two time intervals during which the state of the output 12 is 'Off'.

Correspondingly, control of the power supply can also be carried out if the device 10" of Figure 5 receives the control signal of Figure 4.

In the embodiment of Figure 5, the length of the time period used as an additional criterion as well as the number of time intervals used as the limit may be such criteria that the consumer himself/herself or the service provider can feed to the device 10" by means of a second control signal transmitted via a user interface 25 or a communications link. The user interface which may be included in the device according to the embodiment of Figure 5 or alternatively in a device according to an embodiment described earlier may be comprised of a keyboard and a display, for example.

It is to be understood that the above description and the related drawings are only intended to illustrate the present invention. Different variations and modifications of the invention will be apparent to a person skilled in the art without deviation from the scope of the invention.

## Claims

1. A device (10, 10', 10") for controlling power supply to electric appliances of a building or part of a building, comprising:
at least a first and a second output (11, 12) for controlling the power supply to different electric appliances in the building;
an interface (20) for receiving a control signal, and
a controller (21) which, in response to the received control signal (18), controls said outputs (11, 12) to switch the power supply to the electric appliances connected to them on or off, **characterized in that**
said first output (11) is an output for controlling the power supply to electric appliances whose power supply should be switched off on the basis of a first criterion in situations where the price of electricity is high;
said second output (12) is an output for controlling the power supply to electric appliances whose power supply should be switched off on the basis of a second criterion in situations where the price of electricity is high;
the controller (21) is configured to receive from the interface (20) a control signal (18) containing time-interval-specific control parameters for a particular time period, the control parameters being selected on the basis of the determined price of electricity for the time intervals included in the particular time period; and
the controller (21) is configured, in response to the control signal (18), to analyze the control parameters time-interval-specifically to identify those time intervals during which said first criterion is met and to switch off the power supply via the first output (11) for the duration of the identified time intervals, and to identify those time intervals during which the second criterion is met and to switch off the power supply via the second output (12) for the duration of the identified time intervals.

2. A device (10') according to claim 1, **characterized in that** the time-interval-specific control parameters are formed of the price of electricity or an index representing the price of electricity in the particular time interval, and that the first criterion and the second criterion are met when the price or index exceeds a first or a second limit, respectively.

3. A device (10') according to claim 1, **characterized in that** the time-interval-specific control parameters are formed of the price of electricity or an index representing the price of electricity in the particular time interval, and that the first criterion and the second criterion are met when the price or index exceeds a first or a second limit, respectively, and when, within a given time period, the number of those time intervals during which the power supply is switched off with regard to the first output (11) or the second output (12), respectively, does not exceed a predetermined limit.

4. A device (10) according to claim 1, **characterized in that** the time-interval-specific control parameters are formed of control commands which indicate time-interval-specifically the outputs (11, 12) whose power supply should be switched off in the particular time interval, whereby said first criterion and said second criterion are met when the control command (18) indicates that the power supply of the first output (11) or the second output (12), respectively, should be switched off.

5. A device (10) according to claim 1, **characterized in that** the time-interval-specific control parameters are formed of control commands which indicate time-interval-specifically the outputs (11, 12) whose power supply should be switched off in the particular time interval, whereby said first criterion and said second criterion are met when the control command (18) indicates that the power supply of the first output or the second output, respectively, should be switched off, and when, within a given time period, the number of those time intervals during which the power supply is switched off with regard to the first output (11) or the second output (12), respectively, does not exceed a predetermined limit.

6. A device (10, 10', 10") according to any one of claims 1 to 5, **characterized in that** said interface (20) is formed of a receiver for receiving the control signal (18) via a wireless link.

7. A device (10, 10', 10") according to any one of claims 1 to 5, **characterized in that** said interface (20) is formed of a unit through which the device (10, 10', 10") is connectable to a communications network.

8. A device (10, 10', 10") according to any one of claims 1 to 7, **characterized in that** the device (10, 10', 10") comprises a user interface, and a device (10, 10', 10") is configured to receive, via the user interface (25), a first or a second criterion to be utilized in controlling the power supply to the electric appliances connected to the first output (11) and the second output (12), respectively, to be switched on and off.

9. A device according to any one of claims 1 to 7, **characterized in that** the device (10, 10', 10") is configured to receive, via said interface (20), a first or a second criterion included in a second control signal to be utilized in controlling the power supply to the electric appliances connected to the first output (11) and the second output (12), respectively, to be switched on and off.

10. A control device (14) comprising
a memory (16) in which information has been stored concerning devices (10, 10', 10") controlled by the control device; and
transmitter means (19) for transmitting a control signal (18) to said devices (10, 10', 10") to be controlled, **characterized in that** the control device further comprises
an input (15) for receiving time-interval-specific price information on electricity for a determined time period;
a controller (17) which, in response to the price information, generates a control signal (18) to be further transmitted by transmitter means (19) to the devices (10) to be controlled, the control signal (18) comprising, for said time period, time-interval-specific control parameters selected on the basis of the electricity price information determined for the time intervals included in the particular time period, and the control signal indicating to the devices (10) to be controlled the time intervals when the devices to be controlled should, due to the high price of electricity, switch off the power supply to the electric appliances connected to different outputs (11, 12) of the devices to be controlled.

11. A method for controlling power supply to buildings or parts of buildings, **characterized by**
generating (A) a control signal on the basis of electricity price information, the control signal comprising, time-interval-specifically for a particular time period, time-interval-specific control parameters selected on the basis of information on the electricity price determined for the time intervals included in the particular time period; and
transmitting (B) the control signal to a device which, via several outputs, controls power supply to electric appliances of a building or part of a building and which, in response to the received control signal, switches off time-interval-specifically the power supply to those electric appliances whose electricity supply control is implemented via an output of said device with regard of which the control signal indicates that the power supply should be switched off for that time interval.
